# EUROPEAN PATENT APPLICATION

(11) **EP 2 756 949 A1**
(43) Date of publication of application: **23.07.2014**
(21) Application number: 13151762.5
(22) Date of filing: 18.01.2013
(51) Int. Cl.: B32B 18/00, F16K 47/04, F16K 47/08

(54) **Method for producing a metal carbide trim for severe service control valves with multi stage pressure reduction flow paths**

(71) Applicant: Carter Process Control GmbH, 2534 Alland (AT)
(72) Inventor: Carter, Steven, 2534 Alland (AT); Graussam, Paul, 3861 Eggern (AT)
(74) Representative: Müllner, Martin

(57) **Abstract**

The invention relates to a method for producing a metal carbide trim (5) for severe service control valves with multi stage pressure reduction flow paths (6) comprising the following steps:
-) building at least two disc-shaped preform green bodies (7) or a solid block-shaped green body out of pressed metal carbide powder
-) mechanical finishing of the green bodies to receive the desired shape of the flow paths through the individual green body
-) in the case of disc-shaped preform green bodies (7) assembling them into a disc-stack of the desired configuration
-) sintering of the solid block-shaped green body or the assembled disc-stack in a sintering furnace to receive a single solid body trim. The invention further relates to a trim produced by said method.

## Description

### Technical Field

The present invention relates to a Method for producing a metal carbide trim for severe service control valves with multi stage pressure reduction flow paths.

### Background Art

The current technologies for producing severe service metal carbide trims with multi stage pressure reduction flow paths fall into one of two categories.

Producing sintered multi path discs of metal carbide or producing solid metal carbide disc-plates and form the flow paths by grinding or erosion of the finished metal carbide plates.

Afterwards the discs containing the flow paths are stacked and connected through brazing the individual discs into the finished trim. There are several problems with this state of the art solution of producing trims for severe service control valves. Due to the material properties of metal carbide, especially of tungsten carbide which is the most commonly used, it is extremely difficult to machine the flow paths into the material. The only available methods are grinding and erosion because it is physically impossible to produce the multi stage pressure reduction flow paths required in controlling the velocity by any other normal manufacturing processes. The brazing or erosion leads to several defects in the tungsten carbide. Surface defects can occur when material is torn away while creating the flow path making for an uneven and damaged surface structure. Due to the high temperature of erosion techniques of approx. 3500° C the material is actually melted and a so called white zone of martensite/cementite is created. This change in material properties creates a softer less resistant layer in the areas where high pressures and velocities occur and this leads to fast trim degradation or failure.

Even if the flow paths are included into the forming of individual sintered disc-plates there is still the problem of brazing together the disc-plates into the finished disc-stack. When brazing the disc-plates to form the final element this has to be done at high temperatures of above 900° C using silver braze material which can lead to several problems within the finished trim. During brazing unpredictable material properties occur between the Tungsten carbide and the brazing material which leads to potential weak points between the two materials. The thermal stress during brazing causes micro cracks which can lead to trim failure. The whole process of brazing uses toxic compounds which account for environmental issues. Furthermore the Brazing needs specialized companies which are usually not associated with the tungsten carbide manufacturers which so transportation between different locations is needed leading to higher costs and a higher CO₂-footprint. Because facilities for brazing are organized to carry out all kinds of brazing techniques and material combinations there is a higher risk of material contamination which can also lead to unpredictable results in the finished product. A general problem of brazing individual plates together lies in the inaccuracies of non controlled linearity between individual parts of the disc-stack that can cause flow changes and less pressure reduction stages than calculated or needed.

For more than 20 years the state of the art has nevertheless adopted the above mentioned methods of producing trim solutions for severe service control valves. Since sintering as such is not an easy process the current design and manufacturing standard was developed and applied as the "best technology" for producing trims for severe service control valves. All production processes regarding sintering, erosion, grinding and brazing are implemented in the way described above and the state of the art didn't deviate from this production process in any considerable way for almost a quarter of a century.

### Summary of invention

It is therefore an object of the present invention to provide a new method of producing a metal carbide trim for severe service control valves with multi stage pressure reduction flow paths, which solves the above mentioned problems and disadvantages. It is also an object of the present invention to provide a metal carbide trim for severe service control valves with multi stage pressure reduction flow paths produced by this improved method.

This object is achieved with a method comprising the following steps:
-) building at least two disc-shaped preform green bodies or a solid block-shaped green body out of pressed metal carbide powder
-) mechanical finishing of the green bodies to receive the desired shape of the flow paths through the individual green body
-) in the case of disc-shaped preform green bodies assembling them into a disc-stack of the desired configuration
-) sintering of the solid block-shaped green body or the assembled disc-stack in a sintering furnace to receive a single solid body trim.

"Metal carbide" refers to a compound composed of carbon and metal of the groups IV to VI of the periodic table of elements "Preform green body" refers to the shaped pressed metal carbide powder prior to the sintering process or at the most after a presintering process. The pressed metal carbide can be coated to asure safe handling and stability of the green bodies.
"multi stage pressure reduction flow path" refers to the multi angle paths which go from the outside of the trim to the inside. A typical configuration is that every flow path takes a series of right angle turns in order to slow down the high velocity fluid which runs through it. Other similar configurations where the fluid has to take many detours in order to slow down are known to the person skilled in the art.

Producing all the necessary multi stage flow paths within the green body preform and sintering the finished trim as a whole gives several advantages above the process known in the state of the art. Due to the elimination of the necessity of brazing together the individual disc-plates of metal carbide there are no micro cracks, thermal stresses or surface defects, such as diffusion effects, on any of the areas which come into contact with the high pressure and/or high velocity fluids within the control valve. There are no unpredictable material properties and no toxic materials have to be used in the manufacturing process. Since the whole trim can be produced within the same facility without the need for transportation for brazing the production cost and the CO₂-footprint can be lowered.

Another aspect of the present invention is that the metal carbide used is tungsten carbide. In the severe service control valves tungsten carbide is the preferred material due to its high grade.

According to another aspect of the present invention the mechanical finishing is carried out through machining or grinding the flow paths into the individual green body. Since the green bodies are not yet as hard as the finished metal carbide the mechanical finishing can be carried out at much lower temperatures where the material composition of the metal carbide is not modified.

It is further an aspect of one embodiment of the present invention that the sintering is carried out as a multi-stage sintering process or in the case of multiple disc-shaped green bodies that they are subjected to a pre-sintering process prior to the assembly of the disc stack. The production of the finished trim can be achieved through sintering the trim in multiple stages with different values for pressure, temperature and duration. The appropriate values can be selected by the person skilled in the art to achieve the desired result.

According to an alternative embodiment of the invention the sintering is carried out as a single-stage sintering process.

The object of the invention is further achieved by a metal carbide trim for severe service control valves produced by the method described above, wherein the complete finished trim ready for operation in a control valve consists of a block of uniform metal carbide.

### Brief description of drawings

The invention will now be described in greater detail with reference to the accompanying drawings, in which
Fig. 1 shows microscopic images of the surfaces of a finished trim produced with the method of the present invention compared to a finished trim produced according to the methods used in the state of the art,
Fig. 2 shows a microscopic image of a surface of a finished trim produced according to the methods used in the state of the art,
Fig. 3 shows a microscopic image of the diffusion zone between the metal carbide and a brazing alloy,
Fig. 4 is a schematic sectional view of a severe service control valve,
Fig. 5 shows a view of a trim with multi stage pressure reduction flow paths, and
Fig. 6 shows a sectional view of the trim shown in Fig. 5 along the line VI-VI.

### Description of embodiments

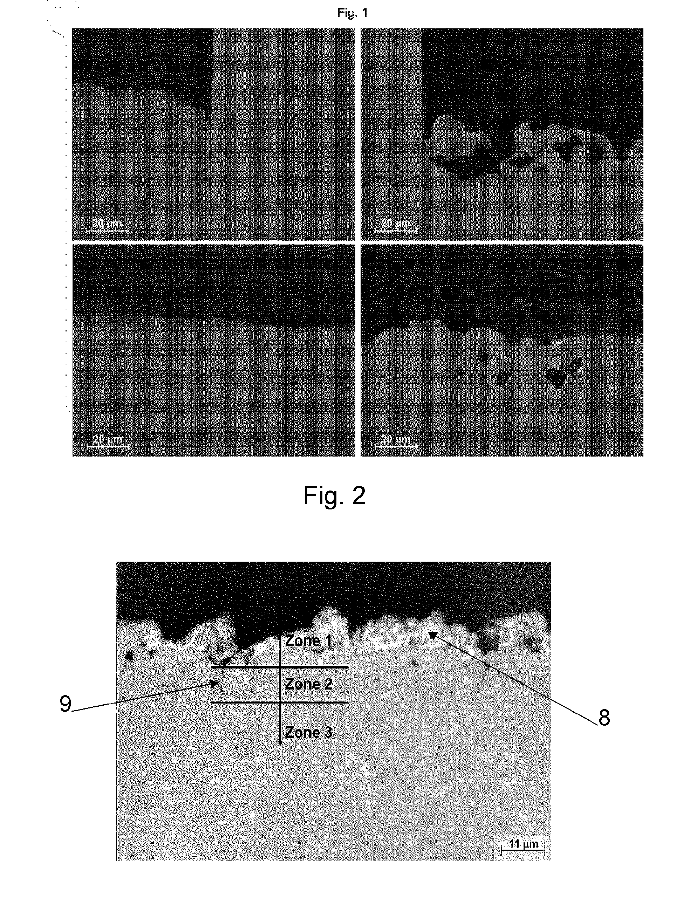

The microscopic images of Fig.1 show in the top right and bottom right picture the surface of a flow path within a finished trim where the flow path was produced by erosion as is one common method used in the state of the art. The top left and bottom left pictures show the surfaces of a flow path produced with the method of the present invention. The light grey areas represent the metal carbide. As can be seen the surfaces from the state of the art trim are uneven and show defects like microcracks. These defects lead to a fast degradation followed by trim failure which in turn means higher maintenance costs of the control valve. The surfaces of the flow paths of the trim produced according to the method of the present invention on the other hand are smooth and uniform. Because of the uniform production of the complete trim in one piece during the sintering process there are no defects in the surfaces or at the boundaries between the single disc plates.

In the microscopic image in Fig. 2 at an even higher magnification than in Fig.1 one can see the defects in the surfaces of a flow path constructed by erosion. Due to the high temperature during erosion the carbide has actually molten and produced a so called "white zone" 8 which is softer than the tungsten carbide itself and therefore vulnerable to faster degradation in the severe service environment. At this magnification there are also the microcracks 9 visible in the surface layer of the eroded flow path.

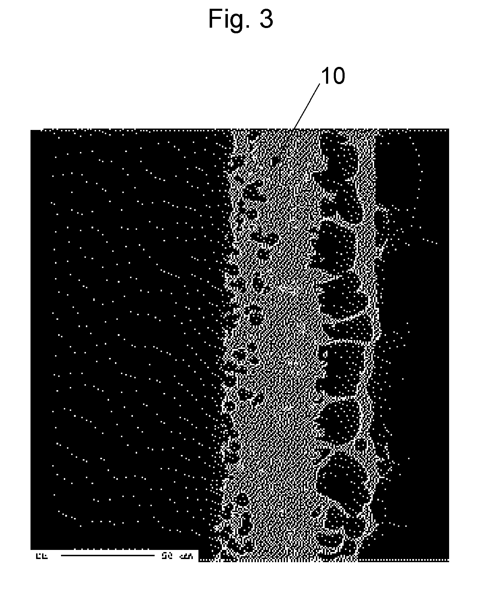

Fig. 3 shows the defects between the metal carbide and the brazing alloy when two disc plates are brazed together as is the only available option in all methods used in the state of the art. Due to the high temperature during brazing a diffusion zone 10 is created where the material properties are uncertain and cannot be controlled. These diffusion zones 10 are also major weak points in the trims produced according to state of the art methods. Since a trim produced according to the method of the present invention does not require brazing at all, these weak points can be completely avoided.

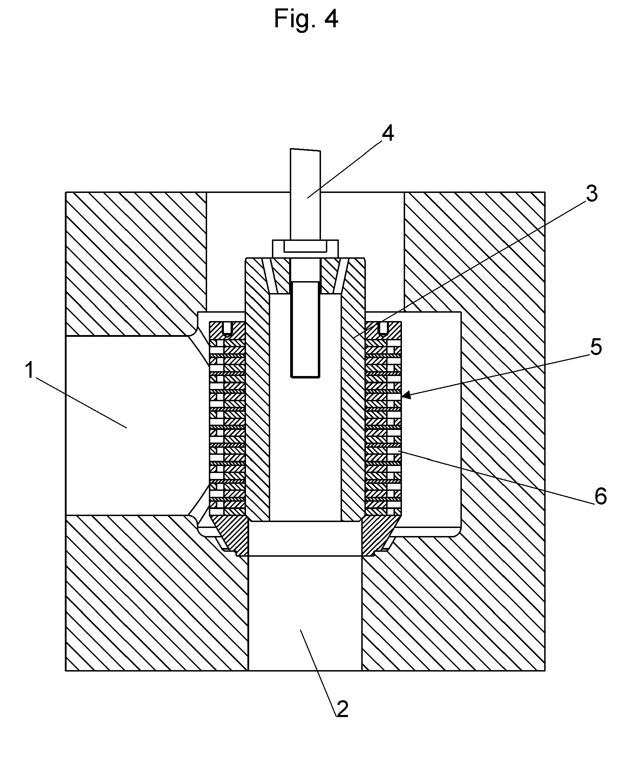

Fig. 4 shows a schematic sectional view of a severe service control valve. The valve has a fluid inlet 1 and a fluid outlet 2. The plug 3 of the valve can be opened and closed by a rod 4 which leads to an operating device. When the valve is open the high velocity and high pressure fluid at the inlet 1 has to pass through the trim 5. The trim has a series of multi stage pressure reducing flow paths 6 which force the fluid along angular paths which reduces velocity and pressure so that the fluid can be released at the outlet 2 in a controlled manner.

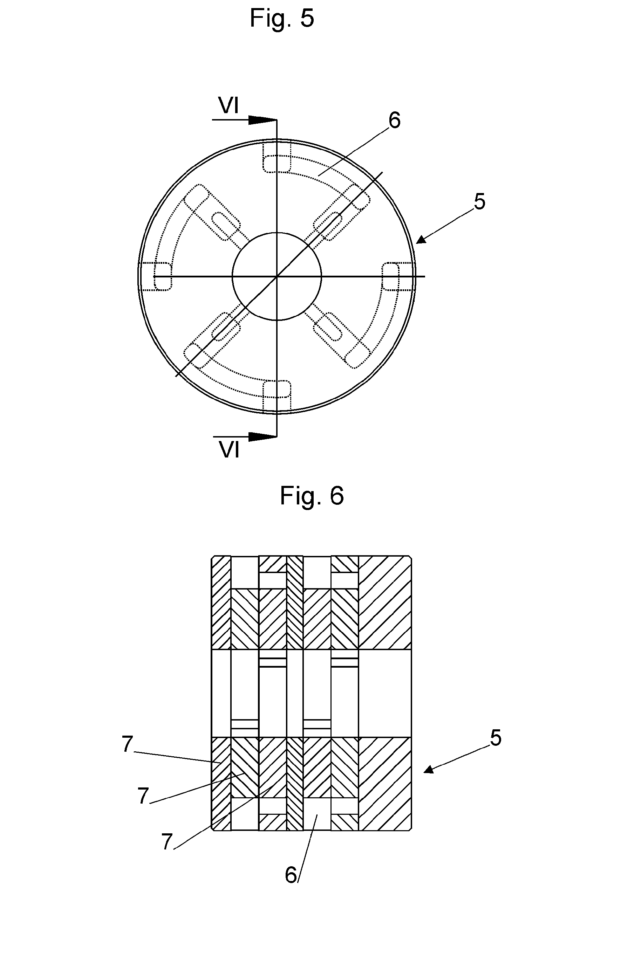

Fig. 5 and 6 show a trim 5 with the flow paths 6 leading from the outer circumference of the cylindrical trim to the centre. The trim is made of individual disc plates 7. A multi stage pressure reducing flow path 6 typically extends through several disc plates 7 where each disc plate bears a section of the flow path 6. During construction of the trim the single disc-plates are created as preform green bodies and the layout of the desired flow paths is formed in this stage. The single disc-plates 7 are then stacked and configured in the desired way and put through the sintering process to form one solid trim with uniform material properties of the metal carbide throughout the whole trim. The elimination of all weak points due to the expendability of techniques like grinding, erosion and brazing leads to a more durable trim with a longer life span and without unexpected behaviours due to uncontrolled material properties or partial or complete trim failure.

## Claims

1. Method for producing a metal carbide trim (5) for severe service control valves with multi stage pressure reduction flow paths (6) comprising the following steps:
-) building at least two disc-shaped preform green bodies (7) or a solid block-shaped green body out of pressed metal carbide powder
-) mechanical finishing of the green bodies to receive the desired shape of the flow paths through the individual green body
-) in the case of disc-shaped preform green bodies (7) assembling them into a disc-stack of the desired configuration
-) sintering of the solid block-shaped green body or the assembled disc-stack in a sintering furnace to receive a single solid body trim.

2. Method for producing a metal carbide trim according to claim 1, **characterized in that** the metal carbide used is tungsten carbide.

3. Method for producing a metal carbide trim according to claim 1 or 2, **characterized in that** the mechanical finishing is carried out through machining or grinding the flow paths into the individual green body.

4. Method for producing a metal carbide trim according to any of the previous claims 1-3, **characterized in that** the sintering is carried out as a multi-stage sintering process or in the case of multiple disc-shaped green bodies that they are subjected to a pre-sintering process prior to the assembly of the disc stack.

5. Method for producing a metal carbide trim according to any of the previous claims 1-3, **characterized in that** the sintering is carried out as a single-stage sintering process.

6. Metal carbide trim for severe service control valves produced by a method according to any of the claims 1-5, **characterized in that** the complete finished trim (5) ready for operation in a control valve consists of a block of uniform metal carbide.
